# EUROPEAN PATENT SPECIFICATION

(11) **EP 1 927 435 B1**
(45) Date of publication and mention of the grant of the patent: **18.05.2011**
(21) Application number: 07121813.5
(22) Date of filing: 28.11.2007
(51) Int. Cl.: B25B 1/18, B25B 1/20, B25B 1/24, B25B 5/14

(54) **Vice for withholding two workpieces during a machining operation, in particular for the production of blades for gas turbines**
Vorrichtung zum Festhalten von zwei Werkstücken während eines Bearbeitungsvorgangs, insbesondere zur Herstellung von Gasturbinenschaufeln
Étau pour le maintien de deux pièces pendant le fonctionnement de la machinerie, en particulier pour la production de pales de turbines à gaz

(30) Priority: 29.11.2006 IT TO20060850
(43) Date of publication of application: 04.06.2008
(73) Proprietor: ANSALDO ENERGIA S.P.A., 16152 Genova (IT)
(72) Inventor: Grasso, Luciano, 16164 Genova (IT)
(74) Representative: Jorio, Paolo

(56) References cited:
- WO-A-91/16171
- WO-A-98/52719
- NL-A- 8 600 114
- US-A- 5 727 779
- US-A- 5 892 344

## Description

The present invention relates to a vice for withholding two workpieces during a machining operation, in particular for the production of blades for gas turbines.

Known to the art are hydraulic-actuation vices that present considerable difficulty in keeping two workpieces clamped in positions parallel to one another. In particular, the retention exerted by vices of a known type does not guarantee a constant clamping force and position, and/or it is necessary to provide additional clamping brackets, which are undesirable.

In addition, the known solutions are relatively cumbersome, so that it is necessary to use extensions for positioning the so-called "centres", i.e. the shoulders used for locating the workpieces to be machined in a predefined reference position for centring the blades. Said extensions, however, are the cause of problems of installation and imprecisions in the positioning of the "centres" themselves, with consequent imprecisions in the machining operation.

NL8600114 A discloses a device, which is made according to the preamble of claim 1, holds flat material during sawing, and comprises two supports joined by an upright and located on opposite sides of the flat material. The distance between the supports can be adjustable, and they are spring-loaded towards each other and lockable. The upright is fixed to the lower support, while the other support vertically slides on the upright.

The aim of the present invention is to provide a vice for withholding two workpieces during a machining operation, which will enable a simple and economically advantageous solution to the problems set forth above.

Provided according to the present invention is a vice for withholding two workpieces during a machining operation, in particular for the production of blades for gas turbines, as defined in claim 1.

The invention will now be described with reference to the annexed drawings, which illustrate a non-limiting example of embodiment thereof and in which:
- Figure 1 is a front perspective view of a preferred embodiment of the vice for withholding two workpieces during a machining operation, in particular for the production of blades for gas turbines, according to the present invention;
- Figure 2 is a rear perspective view of the vice of Figure 1; and
- Figure 3 shows the vice of Figure 1 with parts in cross section.

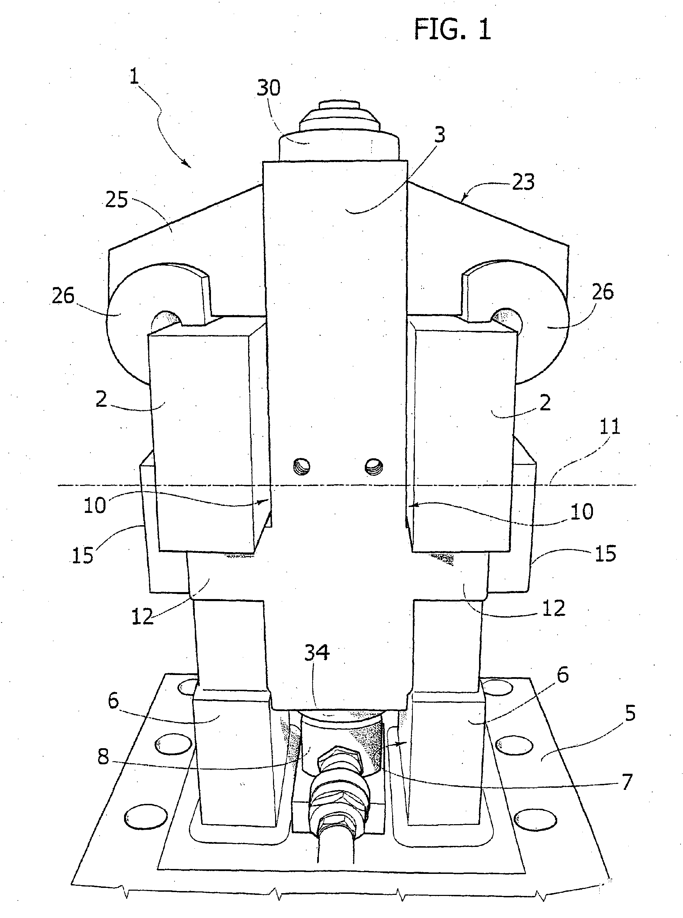

With reference to Figure 1, designated by 1 is a vice for withholding two workpieces 2 during a machining operation, in particular during a milling operation for the production of blades for gas turbines.

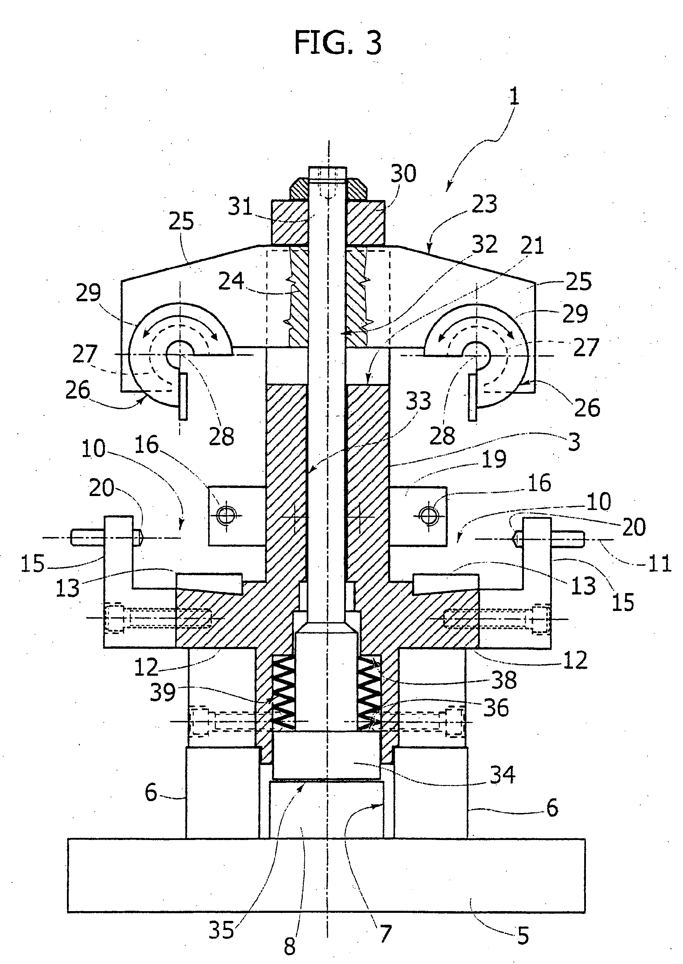

The vice 1 comprises a vertical upright 3 fixed by means of two legs 6 to a base 5, which can be in turn fixed, in a way known and not described in detail, to a bed of a machine tool (not illustrated), for example, a milling machine. In particular, the legs 6 are welded to the base 5, are fixed via screws (Figure 3) to the upright 3, and define laterally a cavity 7 that is sized so as to be able to house a jack 8, the use of which will be described in what follows.

With reference to the attached figures, the workpieces 2 are housed in respective seats 10, which are located in fixed positions on opposite sides of the upright 3 in a horizontal direction 11 and are defined at the bottom by respective walls 12 located above the legs 6.

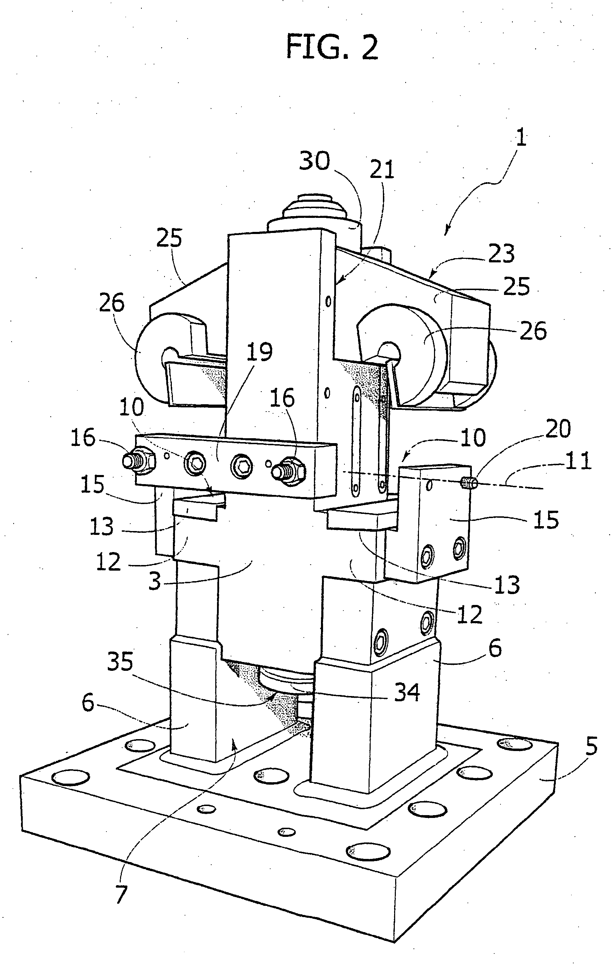

With reference to Figure 2, each wall 12 carries, in a fixed position, a corresponding plate 13, which presents a milling or knurling at the top (in a way not illustrated) and has a relatively high degree of hardness, in order to enable stable resting of the workpiece 2. Each seat 10 is laterally defined by the upright 3 and by a corresponding wall 15, which extends in cantilever fashion upwards with respect to the corresponding wall 12 and in a position facing the upright 3. Finally, each seat 10 is defined at the rear by a corresponding reference shoulder 16, in particular a screw screwed through a rear cross member 19 fixed to the upright 3: the position of each shoulder 16 is adjustable in a horizontal direction, orthogonal to the direction 11.

The walls 15 carry, then, respective reference shoulders 20, in particular screws screwed through the walls 15 themselves: the position of the shoulders 20 is adjustable in the direction 11.

With reference to Figure 3, the top end of the upright 3 defines a vertical slit 21, which extends in the direction 11 and guides the vertical sliding of a cross member 23, which comprises a central portion 24 housed in the slit 21 and two arms 25, which are opposite to one another with respect to the upright 3 parallel to the direction 11. The ends of the arms 25 carry respective jaws 26, which are vertically movable together with the cross member 23 from a raised position to a lowered position for clamping the two workpieces 2 in the respective seats 10.

The jaws 26 comprise respective intermediate portions 27, which are defined on the outside by cylindrical surfaces that engage respective seats of the arms 25 in a rotatable way. In this way, the jaws 26 can be rotated freely about respective horizontal axes 28 orthogonal to the direction 11 for adapting the position of the jaws 26 with respect to the outer surfaces of the workpieces 2 to be clamped. The portions 27 terminate axially with respective pairs of flanges 29, which are located on opposite sides of the arms 25 so as to withhold the jaws 26 axially.

The portion 24 of the cross member 23 is fixed, by means of a device 30 not described in detail, to the top end 31 of a vertical stem 32, which is guided vertically by an internal hole 33 of the upright 3 and comprises a bottom terminal portion 34 widened with respect to the remaining part of the stem 32. The portion 34 has a bottom plane surface 35, which defines at the top the cavity 7, and a top annular surface 36, which defines the bottom of a seat 38 forming part of the hole 33.

The seat 38 houses a pack of cup springs 39, which are pre-loaded and act on the surface 36 to exert a force that pushes the stem 32, the cross member 23, and, hence, the jaws 26 towards the lowered position.

Consequently, the elastic action of the springs 39 keeps both of the workpieces 2 clamped in the respective seats 10. In order to release the workpieces 2, the jack 8 is used, which is of a removable type and does not form part of the vice 1, in so far as it constitutes equipment that is commonly available in industrial plants. Preferably, the jack 8 is of the hydraulic-actuation type and can be completely housed in the cavity 7. However, also another type of movable member could be used that can act on the surface 35 for raising the ensemble defined by the stem 32, the cross member 23, and the jaws 26.

From the foregoing description, it emerges clearly how the vice 1 is able to withhold two workpieces 2 in positions parallel to one another, in so far as the seats 10 and the jaws 26 are substantially symmetrical with respect to an ideal vertical plane passing through the upright 3. In addition, the vice 1 has small overall dimensions so that it is possible to mount on the bed of the machine tool two vices that are the same as one another in parallel, to enable four workpieces 2 to be machined simultaneously, with consequent saving in time and costs.

In addition, since the springs 39 have a constant pre-load, they exert a force that is always the same to keep the workpieces 2 clamped, so that the retention is stable and secure. Consequently, the machining operation on the workpieces 2 is accurate and precise and can be speeded up as compared to what is obtained with hydraulic-actuation vices of a known type.

Release of the workpieces 2, performed via the jack 8, is relatively fast and does not require the use of screws or stay bolts.

The shoulders 16 and 20 (against which the workpieces 2 rest before closing of the jaws 26) facilitate positioning of the workpieces 2 and do not require further systems of positioning or additional extensions.

In addition, the workpieces 2 project horizontally from the seats 10 parallel to one another in a direction opposite to the cross member 19 so that in the machine tool that is to carry out the machining operation there is no need for relatively long spindles.

Finally, from the foregoing description, it emerges clearly that modifications and variations can be made to the vice 1 described herein, without thereby departing from the scope of protection as defined by the attached claims.

In particular, the springs 39 could be of a type different from the cup type indicated above by way of example.

## Claims

1. A vice (1) for withholding two workpieces (2) during a machining operation, in particular for the production of blades for gas turbines; the vice comprising:
- a fixed vertical upright (3);
- two seats (10) located in fixed positions on opposite side parts of said upright (3) and designed, each, to house a corresponding workpiece (2);
- pre-loaded elastic means (39);
- a cross member (23) having two ends, which are located on opposite side parts of said upright (3) and carry respective jaws (26), each associated to a corresponding said seat (10); said cross member (23) being vertically slidable together with said jaws (26) with respect to said upright (3) from a raised position to a lowered position in response to the pre-load of said elastic means (39) for clamping the two workpieces (2) in the respective said seats (10);
- a vertical stem (32) housed at least partially in said upright (3) and vertically fixed to a central portion (24) of said cross member (23);
**characterised in that** said stem (32) comprises:
- a top end (31) fixed to said central portion (24) and
- a bottom terminal portion (34), which is widened with respect to the remaining part of said stem (32) and has a top annular surface (36); said annular surface (36) defining the bottom of an inner seat (38) in said upright (3);
said elastic means (39) being housed in said inner seat (38) and acting on a shoulder defined by said annular surface (36).

2. The vice according to Claim 2, **characterized in that** said bottom terminal portion (34) has a bottom surface (35) defining a cavity (7) designed to house a movable member of a jack (8), which, in use, is designed to push said stem (32) upwards.

3. The vice according to Claim 2, **characterized by** comprising:
- a base (5), and
- two legs (6) laterally defining said cavity (7);
said upright (3) being fixed by means of said two legs (6) to said base (5).

4. The vice according to any one of the preceding Claims, **characterized in that** said jaws (26) are coupled to respective arms (25) of said cross member (23) in an angularly rotatable way about respective horizontal axes (28) parallel to one another.

5. The vice according to any one of the preceding claims, **characterized in that** each said seat (10) is defined by:
- a corresponding bottom wall (12), which carries a rest (13) for the corresponding workpiece (2);
- a corresponding side wall (15), which extends upwards in cantilever fashion with respect to said bottom wall (12) and in a position facing said upright (3); and
- a corresponding rear reference shoulder (16), the position of which is adjustable in a horizontal direction, orthogonal to a direction of alignment (11) of said seats (10).

6. The vice according to Claim 5, **characterized in that** said side walls (15) carry respective lateral reference shoulders (20), the position of which is adjustable in a direction parallel to said direction of alignment (11).

## Patentansprüche

1. Klemmvorrichtung (1) zum Festhalten von zwei Werkstücken (2) während eines Bearbeitungsvorganges, insbesondere zur Herstellung von Schaufeln für Gasturbinen, wobei die Klemmvorrichtung umfasst:
- eine fixierte vertikale Säule (3);
- zwei Aufnahmen (10), die sich in fixierten Positionen an gegenüberliegenden seitlichen Teilen der Säule (3) befinden und von denen jede zur Unterbringung eines entsprechenden Werkstückes (2) ausgestaltet ist,
- ein vorgespanntes elastisches Mittel (39);
- ein Querelement (29), das zwei Enden besitzt, die sich an gegenüberliegenden seitlichen Teilen der Säule (3) befinden und jeweilige Backen (26) tragen, von denen jede einer entsprechenden Aufnahme (10) zugeordnet ist; wobei das Querelement (23) in vertikaler Richtung zusammen mit den Backen (26) in Bezug auf die Säule (3) von einer angehobenen Position in eine abgesenkte Position in Antwort auf die Vorspannung des elastischen Mittels (39) vorschiebbar ist zum Klemmen der beiden Werkstücke (2) in den jeweiligen Aufnahmen (10);
- einen vertikalen Schaft (32), der zumindest teilweise in der Säule (3) untergebracht ist und in vertikaler Richtung in einem mittleren Abschnitt (24) des Querelements (23) fixiert ist;
**dadurch gekennzeichnet, dass** der Schaft (32) umfasst:
- ein oberes Ende (31), das an dem mittleren Abschnitt (24) fixiert ist; und
- einen unteren Anschlussabschnitt (34), der in Bezug auf den übrigen Teil des Schaftes (32) verbreitert ist und eine obere ringförmige Oberfläche (36) beisitzt, wobei die ringförmige Oberfläche (36) den Boden einer inneren Aufnahme (38) in der Säule (3) festlegt;
wobei das elastische Modul (39) in dem inneren Sitz (38) untergebracht ist und auf eine Schulter wirkt, die durch die ringförmige Oberfläche (36) festgelegt ist.

2. Klemmvorrichtung nach Anspruch 1, **dadurch gekennzeichnet, dass** der untere Anschlussabschnitt (34) eine untere Oberfläche (35) besitzt, die einen Hohlraum (7) festlegt, welcher zur Aufnahme eines beweglichen Elements eines Hebers (8) ausgestaltet ist, der so ausgestaltet ist, dass er bei der Benutzung den Schaft (32) nach oben drückt.

3. Klemmvorrichtung nach Anspruch 2, **gekennzeichnet durch**:
- einen Boden (5), und
- zwei Seine (6), die in lateraler Richtung den Hohlraum (7) festlegen;
wobei die Säure (3) mittels der beiden Beine (6) an dem Boden (5) fixiert ist.

4. Klemmvorrichtung nach einem der vorhergehenden Ansprüche, **dadurch gekennzeichnet, dass** die Backen (26) mit jeweiligen Armen (26) des Querelement (23) auf winkelförmige, drehbare Weise um jeweils horizontale Achsen (28), die parallel zueinander verlaufen, gekoppelt sind.

5. Klemmvorrichtung nach einem der vorhergehenden Ansprüche, **dadurch gekennzeichnet, dass** jede Aufnahme (10) festgelegt ist durch:
- eine entsprechende Bodenwand (12), die eine Auflage (13) für das entsprechende Werkstück (2) trägt;
- eine entsprechende Seitenwand (17), die nach oben auf freitragende Weise in Bezug auf die Bodenwand (12) und in eine Position, in der sie der Säule (3) zugewandt ist, verläuft; und
- eine entsprechende hintere Referenzschulter (16), deren Position in einer horizontalen Richtung, die orthogonal zu einer Einstellrichtung (11) der Aufnahmen (10) verläuft, einstellbar ist.

6. Klemmvorrichtung nach Anspruch 5, **dadurch gekennzeichnet, dass** die Seitenwände (15) jeweilige laterale Referenzschultern (20) tragen, deren Position in einer Richtung, die parallel zu der Einstellrichtung (11) verläuft, einstellbar ist.

## Revendications

1. Etau (1) pour retenir deux pièces (2) pendant une opération d'usinage, en particulier pour la production de pales pour les turbines à gaz ; l'étau comprenant :
un montant vertical fixe (3) ;
deux sièges (10) positionnés dans des positions fixes sur les parties latérales opposées dudit montant (3) et chacun conçus pour loger une pièce (2) correspondante ;
des moyens élastiques pré-chargés (39) ;
une traverse (23) ayant deux extrémités, qui sont positionnées sur les parties latérales opposées dudit montant (3) et supportent des mâchoires (26) respectives, chacune associée audit siège (10) correspondant ; ladite traverse (23) pouvant verticalement coulisser conjointement avec lesdites mâchoires (26) par rapport audit montant (3) d'une position levée à une position baissée en réponse à la pré-charge desdits moyens élastiques (39) pour serrer les deux pièces (2) dans lesdits sièges (10) respectifs ;
une tige verticale (32) logée au moins partiellement dans ledit montant (3) et verticalement fixée sur une partie centrale (24) de ladite traverse (23) ;
**caractérisé en ce que** ladite tige (32) comprend :
une extrémité supérieure (31) fixée sur ladite partie centrale (24), et
une partie terminale inférieure (34) qui est élargie par rapport à la partie restante de ladite tige (32) et a une surface annulaire supérieure (36) ; ladite surface annulaire (36) définissant le fond d'un siège interne (38) dans ledit montant (3) ;
lesdits moyens élastiques (39) étant logés dans ledit siège interne (38) et agissant sur un épaulement défini par ladite surface annulaire (36).

2. Etau selon la revendication 2, **caractérisé en ce que** ladite partie terminale inférieure (34) a une surface inférieure (35) définissant une cavité (7) conçue pour loger un élément mobile d'un vérin (8) qui à l'usage est conçu pour pousser ladite tige (32) vers le haut.

3. Etau selon la revendication 2, **caractérisé en ce qu'**il comprend :
une base (5), et
deux pattes (6) définissant latéralement ladite cavité (7) ; ledit montant (3) étant fixé au moyen desdites deux pattes (6) à ladite base (5).

4. Etau selon l'une quelconque des revendications précédentes, **caractérisé en ce que** lesdites mâchoires (26) sont couplées aux bras (25) respectifs de ladite traverse (23) d'une manière angulairement rotative autour d'axes horizontaux (28) respectifs parallèles entre eux.

5. Etau selon l'une quelconque des revendications précédentes, **caractérisé en ce que** chacun desdits sièges (10) est défini par :
une paroi inférieure (12) correspondante qui supporte un support (13) pour la pièce (2) correspondante ;
une paroi latérale (15) correspondante qui s'étend vers le haut en porte-à-faux par rapport à ladite paroi inférieure (12) et dans une position en face dudit montant (3) ; et
un épaulement de référence arrière (16) correspondant, dont la position est réglable dans une direction horizontale, orthogonale à une direction d'alignement (11) desdits sièges (10).

6. Etau selon la revendication 5, **caractérisé en ce que** lesdites parois latérales (15) supportent des épaulements de référence latéraux (20) respectifs, dont la position est réglable dans une direction parallèle à ladite direction d'alignement (11).
